# EUROPÄISCHE PATENTANMELDUNG

(11) **EP 1 005 786 A2**
(43) Veröffentlichungstag der Anmeldung: **07.06.2000**
(21) Anmeldenummer: 99123375.0
(22) Anmeldetag: 23.11.1999
(51) Int. Cl.: A01C 1/02

(54) **Vorrichtung und Verfahren zur hygienischen Keimung von Samenkörnern**

(30) Priorität: 02.12.1998 DE 19855695; 02.12.1998 DE 29823628 U
(71) Anmelder: Berghof Elektronik und Umwelttechnik GmbH, 6200 Wiesing (AT)
(72) Erfinder: Flöck, Franz, 6200 Weising (AT); Sojer;Josef, 6352 Ellmau (AT); Otto, Manfred-Karl Dr., 72119 Ammerbuch (DE); Wiesner, Wolfgang Dr., 70794 Filderstadt (DE)
(74) Vertreter: Schwarzensteiner, Marie-Luise

(57) **Zusammenfassung**

Die vorliegende Erfindung betrifft eine Vorrichtung und ein Verfahren zur Keimung von Samenkörnern bei dem zur Erreichung einer maximalen Homogenität und Hygiene des Keimgutes die Belüftungsluft geschlossen im Kreislauf geführt wird, in welchen eine Klimaeinheit (7) zur Befeuchtung und Temperierung des Keimgutes (22) eingeschaltet ist.

## Beschreibung

Die Erfindung betrifft eine Vorrichtung sowie ein Verfahren zur hygienischen Keimung von Samenkörnern und dergleichen, wie Getreidekörner oder Leguminosen.

Die Verwendung von gekeimten Samenkörnern und dergleichen als Tierfutter oder in der Brotherstellung ist seit vielen Jahrzehnten bekannt. Durch die Keimung werden in den Samenkörnern von Getreide und Leguminosen Inhaltsstoffe erzeugt, welche für eine gesunde Ernährung von Mensch und Tier verantwortlich sind oder diese wenigstens in vieler Hinsicht unterstützen können. So können gewisse Inhaltsstoffe von Keimlingen in Abhängigkeit von deren Keimstadium beispielsweise eine antibiotische Wirkung entfalten oder tragen zur geschmacklichen Verbesserung von daraus erzeugten Brotwaren bei.

In der Literatur sind dazu eine Vielzahl von Anlagen beschrieben worden, in welchen das zu keimende Material in mehreren aufeinander folgenden Stufen behandelt wird. Die Behandlung umfaßt meist in einer ersten Stufe einen Reinigungsschritt, in dem das Material mit Wasser gewaschen wird. Dann wird das Material in einer zweiten Stufe, der sogenannten Naßweiche, gequollen und in einer dritten Stufe, der sogenannten Trockenweiche, angekeimt. In neueren Anlagen wird das Material in dieser letzten Stufe von Zeit zu Zeit mit Wasser befeuchtet und, wenn es sich um geschlossene Systeme handelt, manchmal belüftet. Vorbekannte geschlossene Systeme werden gegebenenfalls temperiert, insbesondere die Luft, welche in diese Systeme eingeblasen wird.

In der DE-OS 23 52 306 ist beispielsweise eine Vorrichtung zur Bearbeitung von angekeimten Getreidekörnern beschrieben. Diese Vorrichtung umfaßt getrennt voneinander einen Keimbehälter und einen sogenannten Hitzebehälter. Im Keimbehälter werden die Getreidekörner zunächst gequollen und dann nach dem Ablassen des Wassers angekeimt. Während des Ankeimens werden die Körner mehrmals gespült, wobei die Körner gerührt werden. Zum Rühren ist ein Rührwerk vorhanden. Das Rührwerk erlaubt nur eine begrenzte Auflockerung der Keimlinge. Danach werden die angekeimten Keimlinge in den sogenannten Hitzebehälter verbracht, in welchem sie in ständiger Bewegung gehalten werden.

Das deutsche Gebrauchsmuster 18 85 776 beschreibt einen Keimapparat, bei dem in einem ansonsten offenen Rahmengestell mehrere Keimkörbe in Etagen übereinander angeordnet sind. Die Keimkörbe, in denen das Ankeimen durchgeführt wird, verfügen über einen Siebboden bzw. einen perforierten Boden, damit Wasch- und Berieselungswasser abfließen kann. Das Wasser fließt durch jeden Etagenboden nach unten, wo es in einem Auffangbehälter gesammelt wird. Dieses Wasser wird erneut der Berieselungsanlage zugeführt. Eine ähnliche Anlage ist auch in der DE-PS 679 521 angegeben.

Aus der US-PS 4,926,598 ist eine Keimanlage bekannt, die über einen geschlossenen Behälter verfügt, der in seinem unteren Bereich einen Siebboden aufweist, auf dem die Samensprossen in geringer Schichtdicke ruhen. In den Behälter ist eine Wasserzufuhrleitung sowie eine Art Sprenkler eingeführt. Am unteren Ende des Behälters ist ein Ausgang für Quell-, Wasch- und Sprühwasser vorhanden. Von oben kann mittels eines Ventilators Luft bzw. ein Luft-Gas-Gemisch eingeblasen werden. Die einzelnen Prozeßschritte sind dabei automatisiert. Aufgrund der Größe der Vorrichtung ist sie wegen des damit verbundenen Wasser- und Energieverbrauches unwirtschaftlich.

In der US-PS 4,821,455 ist eine weitere Keimvorrichtung beschrieben, die aus einer um ihre Achse drehbar gelagerten Trommel aufgebaut ist, in welche mittels Sprenkler Wasser eingeführt werden kann, und über eine Einrichtung zum Einblasen von Luft verfügt. Das Keimgut wird durch Einblasen der Luft unter gleichzeitigem Drehen der Trommel belüftet.

Die bekannten Vorrichtungen und Verfahren zum Keimen von Samenkörnern sind nicht dazu geeignet, die erforderliche Homogenität und Hygiene des Keimgutes zu gewährleisten, da entweder auf die erforderliche Konditionierung von Umgebungsparametern verzichtet wird, oder diese nur sehr schlecht einzuhalten sind. Häufig sind Wasser- und/oder Energieeinsatz unwirtschaftlich hoch. Der Keimungsprozeß dauert viele Tage.

Bei einigen der bekannten Vorrichtungen und/oder Verfahren steht darüber hinaus zu vermuten, daß das Keimgut den Keimungsprozeß ohne Fäulnisbildung nicht übersteht. Wird beispielsweise die Befeuchtung eines Keimbehälters durch das Tropfwasser eines darüber liegenden Behälters bewerkstelligt, kommt es zu einer starken hygienischen Belastung durch ausgeschwemmte Stoffe, Bakterien und/oder Pilze und dergleichen. Ein weiterer Grund für eine Fäulnisbildung besteht darin, daß bei den bekannten Vorrichtungen und/oder Verfahren die erforderliche Durchlüftung nicht ausreichen und nicht in geeigneter Weise gegeben sein wird, beispielsweise wenn bei höheren Schichtdicken des Keimgutes keine oder nur eine begrenzte Auflockerung durchgeführt wird oder diese in einer Art und Weise erfolgt, durch welche die angekeimten Samenkörner nicht weiterwachsen können oder mechanisch zerstört werden. Pilzbefall, Bakterienbelastung, Säuerung und Fäulnisbildung werden hauptsächlich durch beschädigte Körner verursacht, da sie die Keimfähigkeit und damit ihre natürlichen Abwehrmechanismen verloren haben.

Aufgabe der vorliegenden Erfindung ist es daher, eine Vorrichtung und ein Verfahren zur Keimung von Samenkörnern anzugeben, womit in einfacher und wirtschaftlicher Weise eine Fäulnisbildung des Keimbettes während des Keimprozesses ohne chemische Zusätze oder dergleichen gewährleistet werden kann. Gleichzeitig soll die Dauer des Keimprozesses auch ohne Zusatz von Nährlösungen und Keimsalzen oder dergleichen bei homogener Keimqualität wesentlich verkürzt werden.

Diese Aufgabe konnte erfindungsgemäß dadurch gelöst werden, daß die Luft zur zwingenden Belüftung des Keimbettes im wesentlichen im Kreislauf, also geschlossen, geführt wird, und das zwischen der Luftzufuhr und dem Keimbett eine Klimaeinheit zur Befeuchtung und Temperierung der Luft vorgesehen wird.

Gegenstand der vorliegenden Erfindung ist demnach eine Vorrichtung zum Keimen von Samenkörnern und dergleichen, welche im wesentlichen aus einem geschlossenen Behälter mit wenigstens einem darin angeordneten Siebboden zum Halten eines Keimbettes, Mittel zur Zuleitung und Ableitung von Wasser, Mittel zur Zuleitung und Ableitung von Luft sowie entsprechende Heizeinrichtungen für die jeweiligen Zuleitungen besteht und dadurch gekennzeichnet ist, daß die Mittel zur Zufuhr und Ableitung von Luft derart angelegt sind, daß die Luft zur Belüftung des Keimbettes im wesentlichen im Kreislauf geführt ist und dadurch, daß zwischen der Zuleitung und dem Keimbett bzw. dem Behälter eine Klimaeinheit vorgesehen ist, in welcher der Luftstrom befeuchtet und temperiert wird, wobei die Klimaeinheit aus einer Befeuchtungseinrichtung und einer Heizeinrichtung gebildet ist.

Dabei ist vorzugsweise zwischen der Luftzufuhrleitung und der Klimaeinheit ein Mittel zum Antrieb des Luftstromes, insbesondere ein Ventilator, vorgesehen. Aus Gründen der Automatisierbarkeit des Gesamtprozesses ist in dem Luftzufuhrsystem, insbesondere nach der Klimaeinheit, jedoch vor dem Behältereintritt ein Temperaturfühler oder dergleichen vorgesehen, der mit einer zentralen Steuereinheit verbunden ist. Die Klimaeinheit umfaßt des weiteren eine durch ein Ventil öffenbare bzw. verschließbare Frischluftzufuhr zur Regelung des Sauerstoffgehaltes in dem Behälter, welcher in Abhängigkeit vom Zustand des Keimbettes eingestellt werden kann.

Es hat sich überraschenderweise gezeigt, daß durch die Kreislaufführung der Belüftungsluft und die in das Belüftungssystem zwischengeschaltete Klimaeinheit zur Befeuchtung und Temperierung der Belüftungsluft eine effiziente Belüftung des Keimbettes, eine maximale Hygiene und Homogenität des Keimbettes sowie ausgezeichnete Keimungsbedingungen über das gesamte Verfahren gewährleistet werden können. Die Dauer des Keimprozesses ist wesentliche verkürzt und beträgt im Vergleich zu Vorrichtungen bzw. Verfahren des Standes der Technik weniger als 48 Stunden. Es werden Keimlinge gleichförmig in der gewünschten Homogenität auch ohne Zusatz von Nährlösungen oder sogenannten Keimsalzen erreicht. Obwohl ein Zusatz von Nährlösungen oder Keimsalzen unterbleiben kann, können solche für bestimmte Anwendungsbereiche zugesetzt werden.

Insbesondere bei Keimbetten hoher Schichtdicke ist es zwingend erforderlich, das Keimbett von Zeit zu Zeit aufzulockern, um eine Verfilzung zu vermeiden und eine gleichförmige Belüftung zu ermöglichen. Die erfindungsgemäße Vorrichtung umfaßt deshalb gegebenenfalls eine Einrichtung zur Auflockerung des Keimbettes.

Bei einer Ausführungsform der erfindungsgemäßen Vorrichtung besteht die Einrichtung zur Auflockerung des Keimbettes aus einem Rührwerk, das aus einem Umlaufgetriebe und einem vorzugsweise schraubenförmig ausgebildeten Rührelement, zusammengesetzt ist, welche mit einem Antriebsmotor in Wirkverbindung stehen. Das Rührelement, welches das Keimgut im wesentlichen in seiner vertikalen Ausdehnung auflockert ist dabei so zu dimensionieren, daß es bei dem durch das Umlaufgetriebe verursachten Vorschub das gesamte Keimbett auflockern kann. Die sehr kleinen Drehzahlen von Umlaufgetriebe und Rührelement, gewährleisten eine gleichförmige und beschädigungsfreie Auflockerung der Samenkörner bzw. Keimlinge im gesamten Keimbett.

Bei der vorstehend beschriebenen Ausführungsform ist der Siebboden im Behälter, vorzugsweise integral, mit einem Stehrohr ausgebildet, das mit der Klimaeinheit zur Führung des Luftstromes im Kreislauf verbunden ist. Es hat sich hier als sehr zweckmäßig gezeigt, sowohl vor der Klimaeinheit, als auch nach der Klimaeinheit einen Ventilator zum Antrieb der Belüftungsluft vorzusehen, da dadurch eine Belüftung des Keimbettes sowohl von oben als auch von unten, vorzugsweise im Wechsel, möglich ist. Auch das kann in gewisser Weise zur Auflockerung des Keimbettes, insbesondere aber zu dessen homogener Belüftung beitragen und den Einsatz des Rührwerkes reduzieren.

In einer weiters geeigneten Weise ist das Umlaufgetriebe exzentrisch von dem Stehrohr aufgenommen, so daß sich das Umlaufgetriebe zusammen mit dem Rührelement um das Stehrohr herumbewegen läßt. Damit läßt sich bei geeigneter Dimensionierung der Schraube eine völlig homogene Auflockerung des Keimbettes erzielen.

Bei dieser Ausführungsform ist der Behälter darüber hinaus durch einen Deckel luftdicht verschlossen, welcher mittels eines Scharniers an einer Tragevorrichtung für den Behälter befestigt ist, in welcher dieser mittels Tragezapfen kippbar gelagert ist. Nach beendetem Keimprozeß kann der Behälter leicht geöffnet und nach dem Entfernen des Rührwerks entleert und gereinigt werden. Das trägt zu einer größtmöglichen Hygiene des Keimungsprozesses bei.

Bei einer weiteren Ausführungsform der erfindungsgemäßen Vorrichtung weist diese zur Auflockerung des Keimbettes einen im wesentlichen zylindrischen Durchmesser auf und ist um ihre Längsachse drehbar gelagert. Bei dieser Ausführungsform ist es des weiteren vorteilhaft, wenn der Behälter Drehdurchführungen und/oder lösbare An- bzw. Abdockvorrichtungen zur Zufuhr der erforderlichen Medien, wie Luft und Wasser, aufweist. Es ist auch zweckdienlich, die Zu- bzw. Ableitungen für Luft und/oder Wasser flexibel auszugestalten, damit diese wenigstens eine vollständige Drehbewegung des Behälters mitmachen können. Für eine gleichförmige Entwässerung des Systems sind in Drehrichtung des Behälters wenigstens zwei Abflüsse zum Ablassen von belastetem Wasser vorgesehen. In geeigneter Weise kann der Behälter selbst umfänglich perforiert sein und in einem ihn umschließenden äußeren Behälter drehbar gelagert sein. Diese Maßnahme erleichtert insbesondere die konstruktive Ausgestaltung der Wasser- und/oder Luftzufuhr- bzw. Ableitungen.

Bei dieser Ausführungsform sind die Drehbewegungen der zylindrischen Trommel derart abzustimmen, daß zur Aufrechterhaltung einer gleichmäßigen Belüftung die Schichtdicke des Keimgutes homogen, und im wesentlichen parallel zum Siebboden bleibt.

Die erfindungsgemäße Ausgestaltung einer Keimvorrichtung ermöglicht auch solche Anlagen, in welchen wenigstens zwei Keimbehälter, insbesondere in Kastenform, übereinander in einem geschlossenen System angeordnet sind, wobei jeder Keimbehälter insbesondere über ein eigenes Luftzufuhr- und Klimatisierungssystem verfügt. Auch ist dann möglich, daß jeder Behälter über eine eigene zentrale Steuereinheit verfügt. Bei dieser Ausgestaltung einer erfindungsgemäßen Vorrichtung sind Hygiene und Homogenität des jeweiligen Keimbettes gegeben und eine Auflockerung ist aufgrund der möglichen geringen Schichtdicke des Keimbettes nicht zwingend erforderlich. Sie kann jedoch gegebenenfalls mittels einer integrierten Schüttelvorrichtung oder bereits durch eine Belüftung in abwechselnder Richtung, also einmal von oben oder einmal von unten erfolgen. Unter geringer Schichtdicke versteht man insbesondere Keimbette von nicht wesentlich mehr als 15 cm Schütthöhe.

Obwohl durch die Art der Belüftung, insbesondere auch durch die vorgesehene Klimaeinheit eine größtmögliche Hygiene des Keimbettes gefördert ist, sollte jede Vorrichtung aus Gründen der Wirtschaftlichkeit und der Lebensmittelqualität auch so ausgestaltet sein, daß die Vorrichtung, d.h. alle Organe, welche mit der Belüftung, Bewässerung und dem Keimprozeß an sich zu tun haben, auf einfache Weise leicht gereinigt werden können. Es hat sich als äußerst zweckdienlich erwiesen, wenn dazu alle Elemente, mit Ausnahme der möglichen Tragevorrichtungen, aus elektropoliertem Edelstahl bestehen.

Die Erfindung betrifft auch ein Verfahren zur hygienischen Keimung von Samenkörnern, bei dem das zu keimende Material in einem geschlossenen Behälter auf wenigstens einem Siebboden abgelegt, mit Wasser gewaschen, einer Naßweiche und anschließend einer Trockenweiche unterworfen wird, wobei während der Trockenweiche eine Klimatisierung des Materials derart erfolgt, daß die zur Belüftung durch das Material geleitete Luft in einem geschlossenen Kreislauf geführt wird, wobei die Luft vor dem Durchleiten durch das Material durch eine Klimaeinheit, in welcher sie in Abhängigkeit vom Zustand des Keimbettes erwärmt und/oder befeuchtet wird, geleitet wird. In das geschlossene Belüftungssystem kann erforderlichenfalls Frischluft über eine mit der Klimaeinheit verbundene Frischluftzufuhr eingeführt werden. Durch diese Maßnahme läßt sich die Frischluftzufuhr begrenzen, was eine Herabsetzung einer möglichen Verkeimung durch äußere Parameter mit sich bringt.

Bei allen angesprochenen Ausführungsformen ist eine Belüftung des Keimbettes abwechselnd von oben und von unten möglich. Damit ist eine gleichmäßige Belüftung unabhängig von der Schichtdicke des jeweiligen Keimbettes und darüber hinaus möglicherweise eine zusätzliche Auflockerung desselben möglich.

Das Keimbett sollte in üblicher Weise in Abhängigkeit vom Zustand des Keimbettes, insbesondere dessen Feuchtigkeitsgrad mittels einer Berieselungsvorrichtung von Zeit zu Zeit befeuchtet und in regelmäßigen wenn auch wenigen Zeitintervallen aufgelockert werden. Diese Auflockerung kann wie beschrieben mittels eines Rührwerkes mit niedriger Drehzahl, derart daß der gesamte Rauminhalt des Behälters abgedeckt ist, erfolgen.

Sie kann auch dadurch erfolgen, daß bei einer weiteren Ausführungsform der im wesentlichen zylindrische Behälter um seine Längsachse gedreht wird. Dabei ist darauf zu achten, und das ist ein wesentliches Kriterium der erfindungsgemäßen Ausführungsform, daß für eine Nivellierung der Schütthöhe über dem Siebboden, d.h. eine im wesentlichen parallele Anordnung des Keimbettes zum Siebboden des zylindrischen Behälters Sorge getragen wird. Diese Nivellierung läßt sich durch empirische Ermittlung des Schüttwinkels eines jeden Keimgutes im nassen Zustand erreichen. Bei geringer Schichtdicke des Keimbettes kann eine Auflockerung gegebenenfalls durch eine vorgesehene Schütteleinrichtung gewährleistet werden. Diese ist jedoch nicht zwingend erforderlich.

Nach Erreichen des gewünschten Keimstadiums können die Keimlinge durch Öffnen einer Klappe im Luftkreislauf und Abschalten der Luftbefeuchtung in der Klimaeinheit getrocknet werden. Sie können auch durch Einfüllen einer geringen Menge Frischwassers und Einschalten einer in dem jeweiligen Behälter vorgesehenen Bodenheizung, welche auch während der Naßweiche Einsatz finden kann, gedämpft werden.

Im folgenden wird die Erfindung anhand einer detaillierteren Beschreibung der erfindungsgemäßen Ausführungsformen weiter erläutert.

Es zeigt:
- Fig. 1: eine erste erfindungsgemäße Ausführungsform einer Keimvorrichtung im Querschnitt;
- Fig. 2: eine zweite erfindungsgemäße Ausführungsform einer Keimvorrichtung im Querschnitt;
- Fig. 3: eine dritte erfindungsgemäße Ausführungsform einer Keimvorrichtung im Querschnitt.

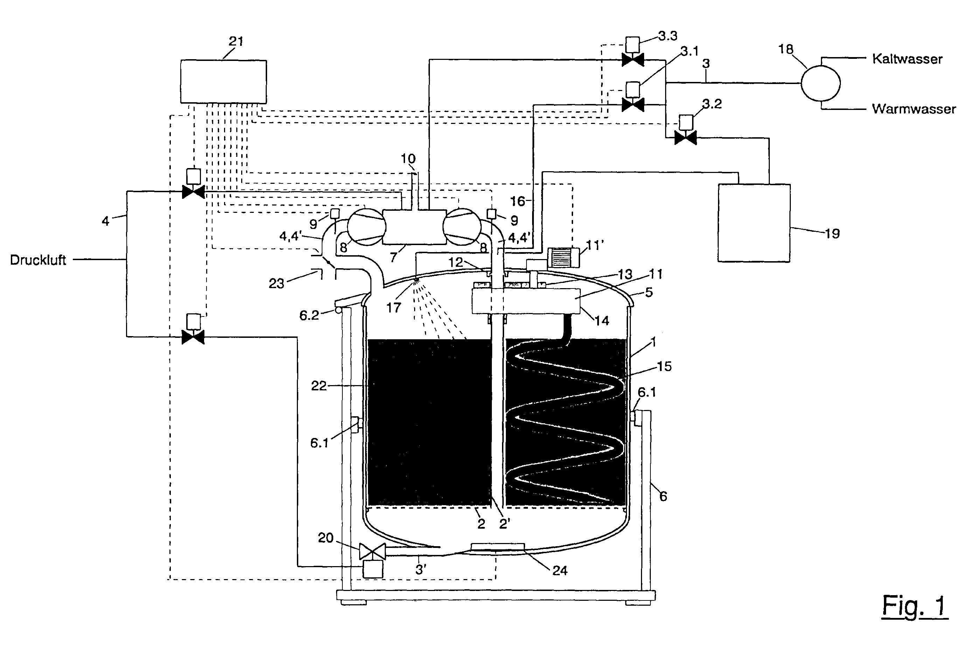

Die in Fig. 1 gezeigte Ausführungsform einer erfindungsgemäßen Keimvorrichtung weist einen im wesentlichen senkrecht stehenden, zylindrischen Behälter 1 auf, der in seinem unteren Endabschnitt einen Siebboden 2 aufnimmt. Der Siebboden 2, ein perforiertes oder mit Schlitzen oder dergleichen versehenes Blech, ist herausnehmbar und wie der Behälter 1 selbst vorzugsweise aus Edelstahl oder dergleichem resistenten und leicht keimfrei haltbaren Material gefertigt. Der Behälter 1 ist in einer Tragvorrichtung 6 auf Tragzapfen 6.1 kippbar gelagert. Er weist einen luftdicht abschließenden Deckel 5 auf, der über ein Scharnier 6.2 an der Tragvorrichtung 6 angelenkt ist. Am Boden des Behälters 1, der vorzugsweise, wie gezeigt, nach außen leicht gekrümmt verläuft, zumindest eine Form aufweist, welche den Abfluß von Wasser ungestört erlaubt, ist ein Wasserablauf 3' mit einem nachgeschalteten Ablaßventil 20 vorgesehen. Im bzw. am Boden des Behälters 1 ist auch eine Heizvorrichtung 24 vorgesehen, mit welcher das Wasser für den Quellvorgang oder ein nachträgliches Dämpfen des Keimgutes heizbar ist. Der Siebboden 2 weist vorzugsweise zentrisch ein integral angeformtes Stehrohr 2' auf, das sich vertikal nach oben und durch ein luftdicht abschließendes Führungselement 12 durch den Deckel 5 erstreckt. Das Stehrohr 2' mündet in die Klimaeinheit 7, welche wiederum mit einer Luftzufuhr 4, insbesondere Drucklufteinheit (nicht gezeigt), verbunden ist. Die Klimaeinheit 7 mündet an ihrem anderen Ende in eine Leitung, welche ihrerseits wieder über den Deckel 5 des Behälters 1 in den Behälter 1 mündet. In der gezeigten Ausführungsform sind zwischen der Klimaeinheit 7 und den jeweils angrenzenden Luftleitungsrohren Ventilatoren 8 zwischengeschaltet, welche zum Transport der Luft in die eine oder andere Richtung dienen. In der Klimaeinheit 7 ist eine nicht gezeigte Befeuchtungseinrichtung 7.1 und eine nicht gezeigte Heizeinrichtung 7.2 zum befeuchten und beheizen der Luft vorgesehen. In den Luftleitrohren können jeweils den Ventilatoren 8 nachgeschaltete Temperatur- und/oder Feuchtigkeitsfühler 9 angeordnet sein.

In dem Behälter 1 und auf dem Siebboden 2 ruht das Keimbett 22, das aus dem zu keimenden Material, wie Samen, Getreidekörner, Leguminosen und dergleichen, besteht.

Der Behälter 1 ist des weiteren mit einer Auflockerungsvorrichtung 11, d.h. hier einem Rührwerk, ausgestattet. Dieses Rührwerk verfügt außerhalb des Behälters 1 auf der Oberseite des Deckels 5 über einen Antriebsmotor 11', welcher über eine zentrale Steuereinheit 21 antreibbar ist. Der Antriebsmotor 11' ist über eine Kupplung 13 im Inneren des Behälters 1 und über dem Keimbett 22 mit einem Umlaufgetriebe 14 verbunden, von dem sich senkrecht nach unten das eigentliche Rührelement 15 erstreckt. Das Rührelement 15, das vorzugsweise zur schonenden Behandlung des Keimbettes 22 aus elektropoliertem Edelstahl gefertigt ist, ist so ausgelegt, daß es in Schraubengängen oder dergleichen das gesamte Keimbett zwischen seitlicher Behälterwand und Stehrohr durchmißt und so beim Rührvorgang selbst, welcher in einer Eigenrotation der Schraube und einem Umlauf um das Stehrohr 2' mittels des Umlaufgetriebes 14 besteht, den gesamten Rauminhalt des Keimbettes 22 zur Auflockerung umfaßt. Zur schonendsten Behandlung des Keimbettes werden sowohl das Umlaufgetriebe 14 als auch das Rührelement 15 mit niedrigen Drehzahlen, welche aufeinander abgestimmt sind, gefahren.

Über den Deckel 5 erfolgt auch die Zufuhr von Wasser. Der allgemeinen Wasserzufuhrleitung 3 ist ein Thermostat 18 vorgeschaltet, mit welchem das einzuleitende Wasser auf eine vorbestimmte Temperatur eingestellt werden kann. Über ein Ventil 3.1 kann temperiertes Wasser über eine Leitung 16 über das Stehrohr 2' in den Behälter 1 in einer Menge eingeleitet werden, welche zum Waschen und Quellen (Naßweiche) des zu keimenden Materials ausreichen kann. Über das Ventil 3.2 wird Wasser in Sprühköpfe 17 eingeleitet, welche in einer die Oberfläche des Keimbettes 22 abdeckenden Anzahl auf der Innenseite des Deckels 5 angeordnet sind. In dieser Leitung kann eine Zusatzheizung 19, wie ein kleiner Elektroboiler, Heizwicklungen oder dergleichen, eingeschaltet sein, um die niedrige Zulauftemperatur beim Öffnen des Warmwasserventiles zu überbrücken. Ein Ventil 3.3 regelt die Zufuhr von vortemperiertem Wasser in die Klimaeinheit 7 bzw. die darin vorgesehene Befeuchtungseinrichtung. An der Klimaeinheit 7 ist des weiteren ein Ventil für die Frischluftzufuhr 10 vorgesehen, welche für den Keimprozeß erforderlich ist.

Im Betrieb der Vorrichtung wird der Behälter 1 mit dem zu keimenden Gut befüllt, so daß es auf dem Siebboden 2 homogen und in gleichförmiger Schichtdicke zu liegen kommt. Das Umlaufgetriebe 14 des Rührwerkes 11 wird über das Stehrohr 2' geschoben und der Deckel 5 wird geschlossen. Das Keimgut wird über die Wasserbefüllung 16 und die Sprühanlage 17 gewaschen und naßgeweicht, wobei zur Beheizung des Wassers erforderlichenfalls die Bodenheizung 24 zugeschaltet wird. Wasch- und Quellwasser werden durch den Wasserabfluß 3' bzw. 20 abgelassen. Während der Tockenweiche wird das Keimbett 22 von Zeit zu Zeit über die Sprühanlage 17 mit temperiertem Wasser besprenkelt. Die Belüftung findet über die Klimaeinheit 7 abwechselnd von oben und von unten mit befeuchteter und temperierter Luft statt, welche darüber hinaus durch die Anlage im Kreislauf geführt ist. Durch ein Ventil an der Klimaeinheit 7 wird die für den Keimprozeß notwendige Frischluftzufuhr 10 erforderlichenfalls geregelt. Steigt die Keimbettemperatur über den Sollwert und das Abschalten der Heizung reicht zur Kühlung nicht aus, so wird der Luftkreislauf über eine vorgesehene Klappe 23 geöffnet. Durch die Befeuchtung der eintretenden Umgebungsluft wird die notwendige Kühlung erreicht.

Die Steuerung 21 übernimmt im übrigen die Betätigung aller Ventile und Schalter, die Temperaturregelung der Versorgungsluft und die Regelung des Wasserstandes über eine Füllstandsmessung oder über die Zulaufzeit. Ein Überlauf kann des weiteren (nicht gezeigt) aus Sicherheitsgründen und zur Ableitung von auf schwimmenden Verunreinigungen vorgesehen werden.

In dieser Anlage wird nun das Keimgut bzw. Keimbett 22 gereinigt, naß- und trockengeweicht, klimatisiert und aufgelockert. Je nach Verwendungszweck werden nach Erreichen des gewünschten Keimstadiums die Keimlinge durch Öffnen des Luftkreislaufes an der Klappe 23 und Abschalten der Luftbefeuchtung in der Klimaeinheit 7 getrocknet oder durch Einfüllen einer geringen Menge Frischwassers und Einschalten der Bodenheizung 24 gedämpft.

Die in Fig. 1 gezeigte Vorrichtung hat beispielsweise einen Durchmesser von 80 cm und eine Höhe von 120 cm. Die Bodeneinheit 24 kann auch außerhalb des Behälters 1 angebracht sein. Alle Teile der Vorrichtung mit Ausnahme der Tragevorrichtung sind vorzugsweise aus Edelstahl bzw. elektropoliertem Edelstahl gefertigt.

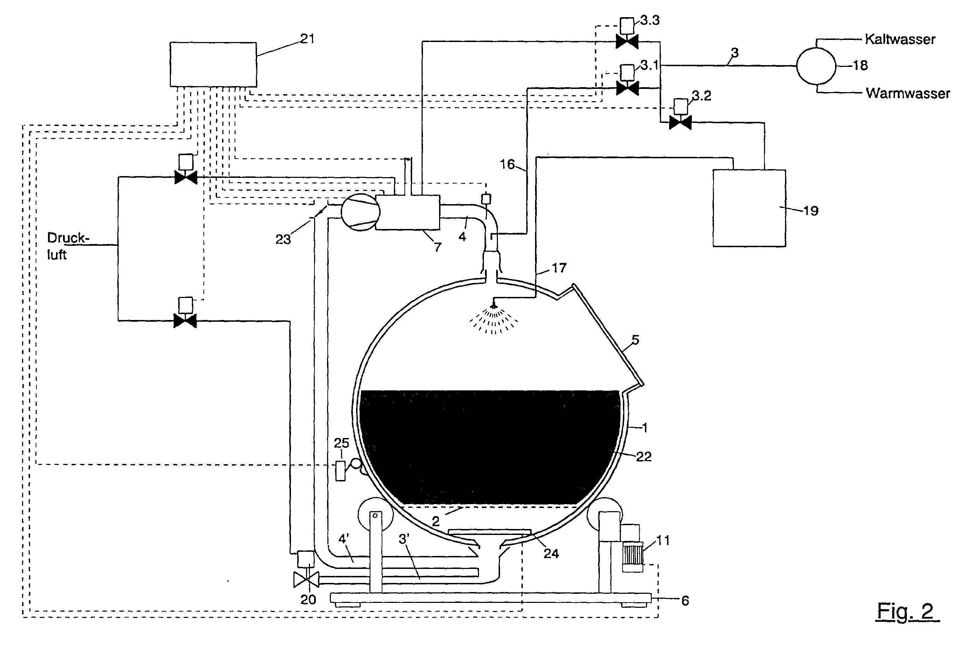

Bei der in Fig. 2 gezeigten Vorrichtung sind Wasserzufuhr und Ableitung sowie Luftzufuhr und Ableitung im wesentlichen in der gleichen Art geregelt wie das für die Vorrichtung von Fig. 1 vorangehend beschrieben worden ist. Die Einzelheiten hierzu werden deshalb nicht nochmals beschrieben, sondern sind für den Fachmann aus der dazugehörigen Zeichnung ohne weiteres ersichtlich.

Im Unterschied zur Vorrichtung gemäß Fig. 1 ist der Behälter hier eine waagerechte Trommel mit einem darin gehaltenen Siebboden 2, welche in einer Tragevorrichtung 6 drehbar gelagert ist. Der Behälter 1 weist vorzugsweise einen Durchmesser von 120 cm und eine Breite von 100 cm auf und ist demnach zylindrisch ausgestaltet, er könnte jedoch zum Beispiel auch 4- oder 5-eckig sein. Darin liegt das Keimbett 22 auf einem Siebboden, welcher wie in Fig. 1 sowohl zur Drainage als auch zur Belüftung des Keimbettes dient. Der zur Befüllung und Entleerung notwendige Deckel 5 schließt wieder luft- und wasserdicht. Zur Auflockerung des Keimbettes 22 wird der Behälter 1 auf einem Tragegestell 6 drehbar gelagert und mittels eines Antriebmotors 11 angetrieben. Die Art der Lagerung, wie gezeigt außen auf Rollen, zentral oder in Kombination daraus und die Art des Antriebes, über Kette, Zahnriehmen, Zahnräder, Zahnkranz oder dergleichen sind beliebig und beeinflussen nicht die Funktion der Vorrichtung.

Eine exakte Positionierung der Drehbewegung, insbesondere zur Einstellung des Schüttwinkels, über einen Endschalter 25, Drehgeber oder eine andere geeignete Vorrichtung ist jedoch zwingend erforderlich. Die Drehbewegung ist dabei so zu steuern, daß das Keimbett 22 nach einem Auflockerungsvorgang, wozu die Drehung durchgeführt wird, wieder ein Niveau bildet, das parallel zu dem Siebboden 2 verläuft, damit eine gleichmäßige Durchlüftung des Keimgutes gewährleistet bleibt.

Zur Quellung (Naßweiche) wird der Behälter so weit gedreht, daß sich der Drainageboden bzw. Siebboden 2 über dem Keimgut befindet. Dadurch wird die Menge an Wasser gespart, die sich sonst unter dem Siebboden 2 befinden würde.

Wie gesagt, sind die Versorgungseinheiten, die Steuerung und Regelung identisch mit der Vorrichtung gemäß Fig. 1 ausgebildet. Ein Unterschied ergibt sich in der gezeigten Ausführungsform nur aus der Belüftung, da eine alternierende Umkehr der Belüftungsrichtung hier nicht vorgesehen ist. Tatsächlich verzichtet man gewöhnlich auf dieses Merkmal, da aufgrund des Behälterquerschnittes eine Belüftung von unten nicht das gesamte Keimbett 22 abdecken kann. Eine solche Belüftung von unten kann jedoch die Auflockerung des Keimbettes zusätzlich zu der bei diesem Ausführungsbeispiel vorgesehenen Auflockerung durch Drehen der Trommel unterstützen. Die Zuleitungen für Luft und Wasser (3,4) sind wie gezeigt als an- und abkuppelbare Anschlüsse oder als Drehdurchführungen ausgeführt. Dasselbe gilt für den Luftauslaß 4' der mit der Luftzufuhr 4 im Kreislauf geschaltet ist. Der Wasserabfluß 3' bzw. 20 ist als kuppelbarer Anschluß oder als Ventil mit darunterliegendem Auffangtrichter vorgesehen, damit das durch Auswaschen der Körner belastete Wasser während einer Drehung mehrmals abgelassen werden kann und so die Keimlinge nicht durch dieses Wasser durchgewälzt und verunreinigt werden.

In einer weiteren jedoch nicht gezeigten Ausführungsform dieses Ausführungsbeispieles kann der gesamte Keimbehälter 1 in einem äußeren, stationären Behälter drehbar gelagert sein, in dem das Wasser für die Reinigung und Quellung (Naßweiche) zu- und abgeleitet wird.

Der Sieb- bzw. Drainageboden 2 ist wieder so angeordnet, daß er zum Reinigen aufgeklappt oder herausgenommen werden kann.

Wieder übernimmt eine zentrale Steuereinheit 21 die Betätigung aller Ventile und Schalter, die Temperaturregelung der Versorgungsluft und die Regelung des Wasserstandes über eine Füllstandsmessung oder über die Zulaufzeit. Wieder kann ein Überlauf aus Sicherheitsgründen und zur Ableitung von aufschwimmenden Verunreinigungen vorgesehen sein. Alle Teile, mit Ausnahme des Tragegestells 6, sind vorzugsweise aus Edelstahl bzw. elektropoliertem Edelstahl gefertigt.

Die Vorrichtungen gemäß Fig. 1 und 2 können des weiteren Einrichtungen zur automatischen Reinigung integriert aufweisen.

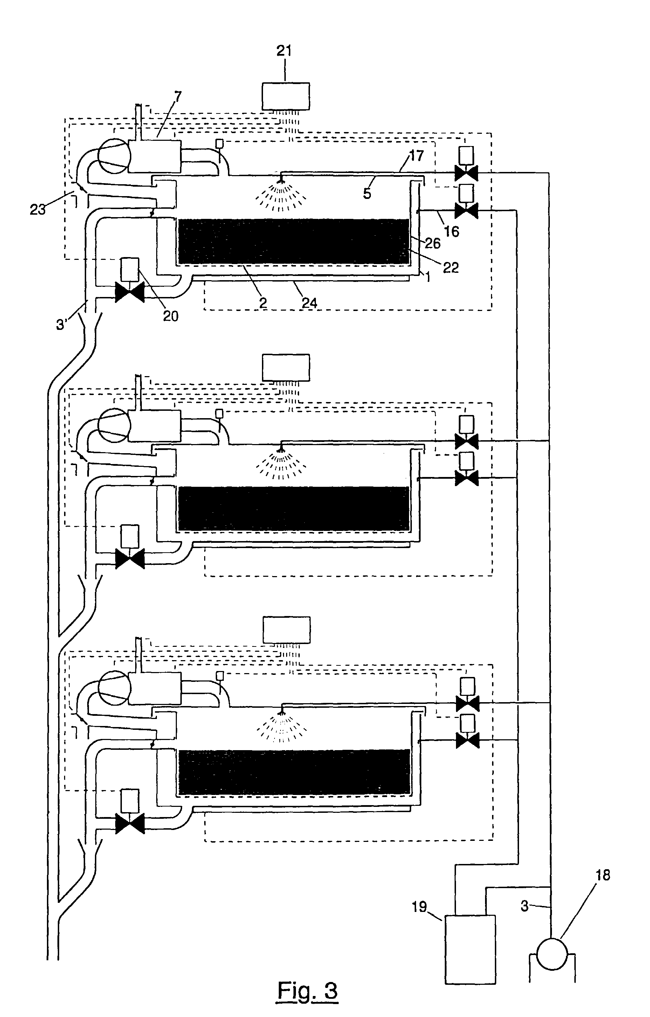

In Fig. 3 sind drei übereinander angeordnete Behälter 1 in Form von Schubladen bzw. Kästen einer Abmessung von etwa 80 cm Breite und 60 cm Tiefe und 30 cm Höhe angeordnet, worin herausnehmbare Keimeinsätze mit Sieb- bzw. Drainageböden 2 angeordnet sind. Jeweils ein Deckel 5 verschließt die Systeme luftdicht. Die Anzahl und Größe der Schubläden ist im Prinzip beliebig.

Die Versorgungseinheiten, die Steuerung und Regelung sind identisch mit der in Fig. 2 gezeigten Vorrichtung, wobei die Schubläden vollständig und voneinander unabhängig ausgerüstet sind und getrennt betrieben werden können. Die Dimensionierung der Versorgungsleitungen für Wasser und Luft ist an die geringen Ausmaße angepaßt. Für die Belüftung hat sich zwar versuchsweise ergeben, daß eine Durchströmung des Keimbettes von unten nach oben geeignet ist, jedoch kann diese Durchströmung auch nur von oben nach unten oder wie bei der Vorrichtung nach Fig. 1 alternierend in beiden Richtungen durchgeführt werden.

Gemeinsam haben die Schubläden nur die Wasserzuführung 3 über den Thermostat 18 und gegebenenfalls einen kleinen Elektroboiler 19 oder dergleichen, um eine konstante Wassertemperatur zu erreichen.

Um ein Herausziehen der Schubladen zu ermöglichen, sind die Zuleitungen für die Befüllung mit Wasser 16 und die Besprühung 17 mit flexiblen Schläuchen ausgeführt. Auf eine separate Zuleitung für die Befüllung 16 könnte bei kleineren Anlagen verzichtet werden.

Der Wasserabfluß 3' bzw. 20 ist kuppelbar und/oder ebenfalls vorzugsweise flexibel ausgeführt. Alle anderen Einrichtungen sind an den Schubläden selbst befestigt und werden mit dieser herausgezogen. Konstruktiv kann es hier auch Lösungen geben, bei der die Klimaeinheit 7 hinten oder seitlich an einem Aufnahmekorpus der Schubläden fixiert sind und die Versorgungsleitungen beim Einschieben der Schubläden angedockt werden. Auch könnte der Zwischenraum zwischen Schublade und Keimeinsatz so gestaltet und mit Einbauten versehen werden, daß dieser die Klimaeinheit bildet.

Bei den bei dieser Vorrichtung vorgesehenen geringen Schichtdicken ist eine zusätzliche Auflockerung des Keimbettes, um einem Verdichten bzw. Verfilzen und damit unter Umständen einem Ersticken des Keimbettes entgegenzuwirken, im allgemeinen nicht erforderlich. Sie kann jedoch zusätzlich (nicht gezeigt) durch eine Schütteleinrichtung, mit welcher die einzelnen Schubläden in bestimmten Zeitintervallen gerüttelt werden, vorgesehen sein.

Wieder übernimmt eine zentrale Steuereinheit 21 die Betätigung aller Ventile und Schalter, die Temperaturregelung der Versorgungsluft und die Regelung des Wasserstandes über eine Füllstandsmessung oder über die Zulaufzeit. Die Schubläden können wieder mit einem Überlauf versehen sein, der auch zum Ableiten von auf schwimmenden Verunreinigungen dienen kann.

Allen beschriebenen Ausführungsformen gemeinsam ist also die Tatsache, daß der zur Belüftung durch das Keimgut geleitete Luftstrom im wesentlichen im Kreislauf geführt ist, und das eine Klimaeinheit zur Befeuchtung und Temperierung der Luft in dem Luftkreislaufsystem vorgesehen ist. Varianten ergeben sich lediglich aus dem jeweils konstruktiven Aufbau des bzw. der Keimungsbehälter und der diesen gegebenenfalls zugeordneten Auflockerungseinrichtungen.

Alle Funktionen des Keimvorganges, einschließlich eventuelle Nachbehandlungen, wie Trocknen oder Dämpfen, können durch die Merkmale der Anlagen, bezogen auf die Verarbeitungsmengen, auf kleinstem Raum und geringstmöglichem Wasser- und Energieeinsatz ausgeführt werden. Die automatische Steuerung und Regelung minimiert den Arbeitsaufwand. Hygiene und Reinigungsmöglichkeit sind durch Materialauswahl und konstruktive Ausführungen gewährleistet. Eine optimale Prozeßführung hat bei allen drei Ausführungsbeispielen, selbst bei ausschließlichem Einsatz von Leitungswasser und Umgebungsluft, sehr homogene Keimergebnisse und sehr kurze Keimzeiten erbracht. Eine Sproßlänge von durchschnittlich 10 mm und eine durchschnittliche Wurzellänge von 25 bis 30 mm kann in 44 Stunden Keimdauer, also weniger als 2 Tagen, einschließlich der Quellzeit, erreicht werden.

### Bezugszeichenliste

- 1: Behälter
- 2: Siebboden
- 2': Stehrohr
- 3: Wasserzuleitung
- 3': Wasserableitung
- 4: Luftzuleitung
- 4': Luftableitung
- 5: Deckel
- 6: Tragevorrichtung
- 6.1: Tragezapfen
- 6.2: Scharnier
- 7: Klimaeinheit
- 7.1: Befeuchtungseinrichtung
- 7.2: Heizeinrichtung
- 8: Ventilatoren
- 9: Temperaturfühler
- 10: Frischluftzufuhr
- 11: Auflockerungseinrichtung
- 11': Antriebsmotor
- 12: Führungselement
- 13: Kupplung
- 14: Umlaufgetriebe
- 15: Rührelement
- 16: Befüllung Wasser
- 17: Besprühungsanlage
- 18: Thermostat
- 19: Boiler
- 20: Ventil (Wasser)
- 21: Steuereinheit
- 22: Keimbett
- 23: Frischluftklappe
- 24: Bodenheizung
- 25: Endschalter
- 26: Keimeinsatz

## Patentansprüche

1. Vorrichtung zum Keimen von Saatgut, im wesentlichen bestehend aus einem geschlossenen Behälter (1) mit wenigstens einem darin angeordneten Siebboden (2) zum Halten eines Keimbettes (22), Mitteln zur Zuleitung (3) und Ableitung (3') von Wasser, Mitteln zur Zuleitung (4) und Ableitung (4') von Luft sowie entsprechenden Heizeinrichtungen für die jeweiligen Zuleitungen (3, 4), dadurch gekennzeichnet, daß die Mittel zur Zufuhr (4) und Ableitung (4') von Luft derart angelegt sind, daß die Luft zur Belüftung des Keimbettes (22) im wesentlichen im Kreislauf geführt ist, und dadurch, daß zwischen Zuleitung (4) und Keimbett (22) bzw. Behälter (1) eine Klimaeinheit (7), in welcher der Luftstrom befeuchtet und temperiert wird, vorgesehen ist, wobei die Klimaeinheit (7) aus einer Befeuchtungseinrichtung (7.1) und einer Heizeinrichtung (7.2) gebildet ist.

2. Vorrichtung nach Anspruch 1, dadurch gekennzeichnet, daß jeweils zwischen der Luftzufuhrleitung (4) und der Klimaeinheit (7) ein Mittel zum Antrieb des Luftstromes vorgesehen ist.

3. Vorrichtung nach Anspruch 2, dadurch gekennzeichnet, daß das Mittel ein Ventilator (8) ist.

4. Vorrichtung nach einem der Ansprüche 1 bis 3, dadurch gekennzeichnet, daß in dem Luftzufuhrsystem wenigstens ein Temperaturfühler (9) vorgesehen ist, der mit einer zentralen Steuereinheit (21) verbunden ist.

5. Vorrichtung nach einem der Ansprüche 1 bis 4, dadurch gekennzeichnet, daß die Klimaeinheit (7) eine durch ein Ventil öffenbare bzw. verschließbare Frischluftzufuhr (10) aufweist.

6. Vorrichtung nach einem der Ansprüche 1 bis 5, dadurch gekennzeichnet, daß der Behälter (1) des weiteren eine Einrichtung (11) zur Auflockerung des Keimbettes (22) aufweist.

7. Vorrichtung nach einem der Ansprüche 1 bis 6, dadurch gekennzeichnet, daß die Einrichtung (11) zur Auflockerung des Keimbettes (22) ein Rührwerk, bestehend aus Umlaufgetriebe (14) und Rührelement (15), welche mit einem Antriebsmotor (11') in Wirkverbindung stehen, ist.

8. Vorrichtung nach Anspruch 7, dadurch gekennzeichnet, daß der Siebboden (2) integral mit einem Stehrohr (2'), das mit der Klimaeinheit (7) zur Führung des Luftstromes im Kreislauf geführt ist, verbunden ist.

9. Vorrichtung nach Anspruch 7 oder 8, dadurch gekennzeichnet, daß das Umlaufgetriebe (14) exzentrisch von dem Stehrohr (2') aufgenommen ist.

10. Vorrichtung nach Anspruch 7, 8 oder 9, dadurch gekennzeichnet, daß der Behälter (1) durch einen Deckel (5) luftdicht verschlossen ist, welcher mittels eines Scharniers (6.2) an einer Tragvorrichtung (6) befestigt ist, in welcher der Behälter (1) mittels Tragzapfen (6.1) kippbar gelagert ist.

11. Vorrichtung nach einem der Ansprüche 1 bis 6, dadurch gekennzeichnet, daß zur Auflockerung des Keimmaterials der Behälter (1) einen im wesentlichen zylindrischen Durchmesser aufweist und um seine Längsmittelachse drehbar gelagert ist.

12. Vorrichtung nach Anspruch 11, dadurch gekennzeichnet, daß der Behälter (1) Drehdurchführungen und/oder lösbare An- bzw. Abdockvorrichtungen zur Zufuhr der erforderlichen Medien aufweist.

13. Vorrichtung nach Anspruch 11, dadurch gekennzeichnet, daß der Behälter (1) flexible Zu- bzw. Ableitungen aufweist.

14. Vorrichtung nach einem der Ansprüchen 11 bis 13, dadurch gekennzeichnet, daß in Drehrichtung des Behälters (1) wenigstens zwei Abflüsse zum Ablassen von belastetem Wasser vorgesehen sind.

15. Vorrichtung nach einem der Ansprüche 11 bis 14, dadurch gekennzeichnet, daß der Behälter (1) umfänglich perforiert ist und in einem ihn umschließenden äußeren Behälter (1') drehbar gelagert ist.

16. Vorrichtung nach einem der Ansprüche 1 bis 6, dadurch gekennzeichnet, daß wenigstens zwei Behälter (1) übereinander angeordnet sind, wovon jeder über eine eigene Klimatisierungseinheit und ein eigenes Bewässerungssystem verfügt.

17. Vorrichtung nach einem der Ansprüche 1 bis 6, dadurch gekennzeichnet, daß jeder Behälter (1) über eine eigene zentrale Steuereinheit (21) verfügt.

18. Vorrichtung nach einem der vorhergehenden Ansprüche 1 bis 17, dadurch gekennzeichnet, daß alle Elemente, mit Ausnahme der Tragevorrichtungen (6), dem Scharnier (6.2) und den Tragezapfen (6.1) aus elektropoliertem Edelstahl gefertigt sind.

19. Verfahren zur hygienischen Keimung von Samenkörnern bei dem das zu keimende Material in einem geschlossenen Behälter auf wenigstens einem Siebboden abgelegt, mit Wasser gewaschen, einer Naßweiche und ausschließend einer Trockenweiche unterworfen wird, dadurch gekennzeichnet, daß während der Trockenweiche eine Klimatisierung des Materials derart erfolgt, daß die zur Belüftung durch das Material geleitete Luft in einem geschlossenen Kreislauf geführt wird, wobei die Luft vor dem Durchleiten durch das Material durch eine Klimaeinheit, in welcher sie in Abhängigkeit vom Zustand des Keimmaterials erwärmt und/oder befeuchtet wird, geleitet wird.

20. Verfahren zur hygienischen Keimung nach Anspruch 19, dadurch gekennzeichnet, daß gegebenenfalls Frischluft über eine mit der Klimaeinheit verbundene Frischluftzufuhr eingeführt wird.

21. Verfahren zur hygienischen Keimung nach Anspruch 19 oder 20, dadurch gekennzeichnet, daß man das Keimbett abwechselnd von oben und unten belüftet.

22. Verfahren zur hygienischen Keimung nach einem der Ansprüche 1 bis 21, dadurch gekennzeichnet, daß man während der Trockenweiche das Keimmaterial in Abhängigkeit vom Zustand des Keimbettes mittels einer Sprühanlage befeuchtet.

23. Verfahren zur hygienischen Keimung nach einem der Ansprüche 19 bis 22, dadurch gekennzeichnet, daß das Keimmaterial während der Trockenweiche in regelmäßigen Zeitintervallen aufgelockert wird.

24. Verfahren zur hygienischen Keimung nach Anspruch 23, dadurch gekennzeichnet, daß das Auflockern mittels eines Rührwerkes mit niedriger Drehzahl aufgelockert wird, derart daß der gesamte Rauminhalt des Keimbettes abgedeckt ist.

25. Verfahren zur hygienischen Keimung nach Anspruch 24, dadurch gekennzeichnet, daß das Rührwerk ein Umlaufgetriebe und eine daran senkrecht angeordnetes Rührelement aufweist.

26. Verfahren zur hygienischen Keimung nach Anspruch 23, dadurch gekennzeichnet, daß das Auflockern des Keimmaterials während der Trockenweiche durch drehen des im wesentlichen zylindrischen Behälters (1) um seine Längsachse erfolgt.

27. Verfahren zur hygienischen Keimung nach Anspruch 25, dadurch gekennzeichnet, daß für eine Nivellierung der Schütthöhe über dem Sieb der Schüttwinkel eines jeden Keimgutes im nassen Zustand bestimmt wird.

28. Verfahren nach Anspruch 23, daß gegebenenfalls übereinander angeordnete Behälter zur Auflockerung mittels einer Schütteleinrichtung geschüttelt werden.

29. Verfahren nach einem der Ansprüche 19 bis 28, dadurch gekennzeichnet, daß nach Erreichen des gewünschten Keimstadiums die Keimlinge durch Öffnen einer Klappe im Luftkreislauf und Abschalten der Luftbefeuchtung in der Klimaeinheit getrocknet werden.

30. Verfahren zur hygienischen Keimung nach einem der Ansprüche 19 bis 28, dadurch gekennzeichnet, daß nach dem Erreichen des gewünschten Keimstadiums die Keimlinge durch Einfüllen einer geringen Menge Frischwassers und Einschalten einer Bodenheizung gedämpft werden.
